# EUROPEAN PATENT APPLICATION

(11) **EP 2 821 426 A1**
(43) Date of publication of application: **07.01.2015**
(21) Application number: 13174897.2
(22) Date of filing: 03.07.2013
(51) Int. Cl.: C08G 69/42, C08K 5/5313, C08L 77/02, C08L 77/06, C08K 3/00

(54) **Polymers with complex macromolecular architecture having flame-retardant properties**

(71) Applicant: Universita' Degli Studi Di Milano, 20122 Milano (IT)
(72) Inventor: Di Silvestro, Giuseppe, 20823 LENTATE SUL SEVESO (MB) (IT); Ortenzi, Marco Aldo, 20100 MILANO (IT); Farina, Hermes, 24010 SORISOLE (BG) (IT); Basilissi, Luca, 20010 CORNAREDO (MI) (IT)
(74) Representative: Barchielli, Giovanna

(57) **Abstract**

The present invention relates to linear or branched polyamides obtainable by polymerisation of a mixture containing a bifunctional monomer of type AB and/or a monomer mixture of type AA+BB in the presence of:
a) one or more carboxylic acids, or a derivative thereof such as ester and anhydride, and/or amines and/or polyhedral oligosilsequioxanes compounds (POSS) having one or more carboxyl and/or amino functional groups; and
b) one or more phosphorus containing molecules containing at least a -POOH group and/or a salt thereof; and
c) one or more metal hydroxides and/or metal salts, where the metal belongs to Groups from 1 to 14 of the Periodic Table;
provided that when the phosphorus containing molecules, as defined under b), contain the -POOH group in salified form, then the presence of the metal hydroxides and/or metal salts, as defined under c) is optional.

## Description

The present invention relates to polyamides with a linear or complex branched structure, in particular the star- or tree-shaped type, comprising phosphorous containing molecules and metal hydroxides and/or metal salts with improved flame-retardant property.

### Technical background

The flame retardance of polymer materials, in particular polyamides, is currently obtained by a process of physical mixing (compounding) of the molten polymer matrix with materials having proven flame-resistant properties (additives). The main drawbacks of said process are the difficulty of distributing the additive evenly in the matrix, phase segregations, and possible migration and loss of additive over time. The direct consequences of these drawbacks are the need for massive use of additives, increased costs of the material, and often a deterioration in its mechanical properties and loss of properties over time. Moreover, the classes of additives currently used present a number of problems: for example, brominated compounds are added in large quantities (up to 23-25% w/w) and need a synergistic agent (usually antimony trioxide) in the quantity of approx. 6-8% w/w; many of these compounds are known to be toxic to humans and the environment, and are consequently governed by national and supranational regulations restricting their manufacture and use. Red phosphorus (added in the quantity of 5-10% by weight) presents handling problems (fire risk) and is not suitable for many applications, melamine cyanurate makes it impossible to recycle the material and precludes some applications. Also metal hydroxides can be used as flame retardant additives since during combustion they produce an endothermic reaction which reduces polymer surface temperature and frees water molecules to dilute the concentrated combustible gas; metal hydroxides have low efficiency and are used in large quantities (even more than 50% by weight), resulting in loss of the mechanical properties of the final material and are not commonly used with polyamides. In all cases, the material produced cannot be used in the manufacture of textile fibers due to its incompatibility with spinning techniques. These problems are discussed, for example, in
"Combustion and fire retardancy of aliphatic nylons" - S.V. Levchik, E.D. Weil, Polym. Int. 49:1033-1073 (2000) or in "Application of magnesium hydroxide as a fire retardant and smoke - suppressing additive for polymers", P.R. Hornsby, Fire Mater, 18 (5) (1994), pp. 269-276.

Polyamides 6 with a complex star- or tree-branched structure, obtainable from AB monomers (i.e. monomers having a carboxy function A and an amino function B) in the presence of polyamines and/or polyacids, are also known from US 6 884 865.

The preparation of branched polymers with a complex structure is discussed in detail in "Hyperbranched and Highly Branched Polymer Architectures: Synthetic Strategies and Major Characterization Aspects". B.I. Voit and A. Lederer Chem. Rev. 2009, 109, 5924-5973.

WO 98/52991 discloses type AA+BB polyamides with flame-retardant properties obtained by polycondensation of at least one dicarboxylic acid, at least one diamine and a carboxyphosphinic acid.

Recently an international application has been submitted, WO 2012/080304, dealing with the synthesis of branched polymers with flame retardant properties having one or more phosphorous containing molecules reacting with only one reactive group during the polymerization.

### Description of the invention

The polymers described in scientific and patent literature suffer of some drawbacks; the presence of molecules reacting with only one reactive group limit the growth of molecular weight and the presence of at least a -POOH group in phosphorous containing molecules limits the conversion. This feature doesn't allow to reach high conversion and good melt viscosity, thus limiting application fields.

It has now been found that it is possible to obtain polyamides with a linear or complex (star- or tree-) branched structure, having improved viscosity and flame-retardant properties by adding metal hydroxides and/or metal salts to the polymerization mixture containing a AB bifunctional monomer and/or a monomer mixture of the type AA+BB and phosphorous containing molecules as chain enders. The phosphorous containing molecules according to the invention contain at least a POOH group and/or a salt thereof. The polyamides according to the invention, present advantageous properties because metal hydroxides and/or salts can interact with -POOH functions allowing to reach higher conversions and therefore melt viscosity besides further increasing the flame-retardant feature of the polymers.

The invention therefore provides linear or branched polyamides obtainable by polymerisation of a mixture containing a bifunctional monomer of type AB and/or a monomer mixture of type AA+BB in the presence of:
a) one or more carboxylic acids, or a derivative thereof such as ester and anhydride, and/or amines and/or polyhedral oligosilsequioxanes compounds (POSS) having one or more carboxyl and/or amino functional groups; and
b) one or more phosphorus containing molecules containing at least a -POOH group and/or a salt thereof; and
c) one or more metal hydroxides and/or metal salts, where the metal belongs to Groups from 1 to 14 of the Periodic Table;
   provided that when the phosphorus containing molecules, as defined under b), contain the -POOH groups in salified form, then the presence of the metal hydroxides and/or metal salts, as defined under c) is optional.

For the purpose of the present invention, "monomer AB" is intended to denote a monomer having a reactive group of the type A and a reactive group of the type B. Accordingly "monomer AA" or "monomer BB" is intended to denote a monomer having two reactive groups of the same type A or B. Preferably AA is a monomer having two reactive groups A= -COOH or a derivative thereof such as an ester or an anhydride, BB is a monomer having two reactive groups B= -NH₂, AB is a monomer having a reactive group A and a reactive groups B as defined above.

Examples of AB monomers which can be used to prepare polyamides according to the invention include caprolactam, 6-amino-hexanoic acid, para- or meta-amino benzoic acid, 11-aminoundecanoic acid, lauryl lactam, 12-aminododecanoic acid; preferably caprolactam, 6-amino-hexanoic acid.

Examples of BB monomers are diamine molecules like hexamethylenediamine, isophoronediamine, phenylenediamines, 1,4-butylenediamine, preferably hexamethylenediamine or 1,4-butylenediamine.

Examples of AA monomers are, aliphatic or aromatic dicarboxylic acids (or their derivatives such as esters or anhydrides) like adipic acid, suberic acid, sebacic acid, terephthalic/isophthalic acids, cyclohexane dicarboxylic acid, naphthalene dicarboxylic acid or an ester or an anhydride thereof preferably adipic acid or suberic acid.

Diamines can be used as such or as salts of diacids.

Linear polyamides are obtained from a polymerization mixture wherein the one or more carboxylic acids, or a derivative thereof such as ester and anhydride, and/or amines and/or polyhedral oligosilsequioxanes compounds (POSS), as defined under a), have one or two carboxyl and/or amino functional groups.

Branched polyamides, having a star- or tree-shaped structure, are obtained from a polymerization mixture wherein the one or more carboxylic acids, or a derivative thereof such as ester and anhydride, and/or amines and/or polyhedral oligosilsequioxanes compounds (POSS), as defined under a), have at least three functional groups selected from carboxyl or primary and/or secondary amino functional groups; and optionally the polymerization mixture may further contain:
d) one or more carboxylic acids or their derivatives such as ester and anhydride, and/or amines having one or two carboxyl and/or amino functional groups.

The amines having at least three functional groups may have primary or secondary functional group (tertiary amino groups are non reactive). Examples of suitable polyamines are bis hexamethylenetriamine, a hexafunctional amine of formula NH2-(CH2)6-NH-(CH2)6-NH-(CH2)6-NH-(CH2)6-NH-(CH2)6-NH2, polyamines deriving from the production of hexamethylenediamine, POSS with amino terminal groups, ethylenediamine oligomers.

The carboxylic acids or a derivative thereof such as ester or anhydride, having at least three functional groups are typically selected from the group consisting of trimesic acid, pyromellitic acid, 2,2'-6,6'-tetracarboxyethylcyclohexanoneor or POSS with carboxyl terminal groups or their derivatives such as ester and anhydride.

Phosphorus containing molecule containing at least a -POOH group and/or a salt thereof according to the invention are preferably: 2-carboxy ethyl phenyl phosphinic acid (CEPPA) and 2-Carboxyethane-1-phosphonic acid and/or a salt thereof.

Preferably the metals present as hydroxides and/or salts are selected from the lithium, sodium, potassium, rubidium, cesium, beryllium, magnesium, calcium, strontium, barium, boron, aluminum, gallium, indium, thallium.

The metal salt is any salt formed by any metal belonging to groups from 1 to 14 of the Periodic Table, preferably groups 1, 2 and 13 and any inorganic and/or organic counter-ion such as for example sulfate, sulfite, organic sulfonate, carbonate, organic carboxylate, nitrate, phosphate, phosphite, organic phosphonate, organic phosphinate, halide.

Preferably the metal salts and/or hydroxides are present in the polymerization mixture in an amount between 0.001 % and 300% mol/mol versus the phosphor containing molecules, preferably between 0.01 % and 200% and more preferably between 5% and 150%.

When the POOH group of the phosphorus containing molecules is in the form of salt, it is preferably salified with a metal belonging to Groups from 1 to 14 of the Periodic Table. Most preferably the metal is selected from the group consisting of lithium, sodium, potassium, rubidium, cesium, beryllium, magnesium, calcium, strontium, barium, boron, aluminum, gallium, indium, thallium.

The linear polyamides according to the invention are obtained from a polymerization mixture as defined above wherein the one or more carboxylic acids and/or amines having one or two carboxyl and/or amino functional groups are selected from the group consisting of acetic acid, benzoic acid, adipic acid, suberic acid, sebacic acid, long- or short-chain aliphatic mono/diacids, terephthalic acid, isophthalic acid, long- or short-chain aliphatic mono/diamines, aromatic mono/diamines.

Preferably the linear or branched polyamides according to the invention have a molecular weight ranging between 1000 and 100.000 Daltons and a phosphorus content of at least 100 ppm, preferably of at least 10 ppm.

Alternatively the linear or branched polyamides may be obtained by a two steps process comprising the:
i) polymerisation of a polymerisation mixture containing a bifunctional monomer of type AB and/or a monomer mixture of type AA+BB in the presence of:
   a) one or more carboxylic acids, or a derivative thereof such as ester and anhydride, and/or amines and/or polyhedral oligosilsequioxanes compounds (POSS) having one or more carboxyl and/or amino functional groups; and
   b) one or more phosphorus containing molecules containing at least a -POOH group and/or a salt thereof; and
ii) compounding the obtained polymer with:
   c) one or more metal hydroxides and/or metal salts, where the metal belongs to Group I to XIII of the Periodic Table.

A further object of the present invention are compounds of the linear or branched polyamides as defined above containing organic/inorganic flame retardants additives and/or their synergists.

Preferably the flame retardant additive is selected from the group consisting of brominated polystyrene, decabromodiphenyl ethane, red phosphor, melamine cyanurate, organic phosphinates (i.e. Clariant Exolit®).

Preferably the synergist is selected from the group consisting of antimonium trioxide, zinc borate, zeolites, zinc oxide complexes.

Preferably the quantity of polyamide in the compound is between 5 and 99%

Phosphorus containing molecule containing at least a -POOH group and/or a salt thereof according to the invention are preferably: 2-carboxy ethyl phenyl phosphinic acid (CEPPA) and 2-Carboxyethane-1-phosphonic acid and/or a salt thereof.

The polymers according to the invention can have a molecular weight of between 1000 and 100.000 daltons; optimal flame-retardant properties can be obtained with at least 100 ppm of P deriving from the phosphorus functions in the polymer and of 10 ppm of metal hydroxides and/or salts.

The polymers of the invention can be prepared by synthesis in glass or steel reactors or in an autoclave, according to the best practices known to the experts in the field. Some conditions may be:
**Synthesis in glass reactors:** Synthesis are conducted in 6 hours, in an oven at 270°C under nitrogen flow and mechanical stirring or at a temperature higher than the polymer melting point.

Synthesis are conducted in a glass apparatus, whose lower part (the flask) is inserted in the oven, while the upper part is maintained outside it. The upper part of the apparatus is fitted with three arms which allow:
a. Entry of nitrogen flow
b. Passage of stirring rod which provides mechanical stirring of the reaction mixture
c. Exit of nitrogen flow

**Synthesis in steel reactor:** Polyamides synthesis are conducted in 6 hours, in an oven at 270°C or at a temperature higher than the polymer melting point, under nitrogen flow, with or without mechanical stirring.

It is conducted in a steel reactor fastened with bolts in both the upper and lower parts; the reactor is placed in the oven, and only the top of it emerges; it is also provided with two arms for the entry and exit of nitrogen flows.

**Synthesis in autoclave:** As an example the synthesis of nylon 6 is conducted in two phases, both at 280°C and under mechanical stirring: the first (2h) under pressure (lactam ring opening), and the second (4h) under nitrogen flow (growth of molecular chain through polycondensation). The polymer is extracted from the reactor in the form of cables which are wound on a reel.

In particular, the present invention allows the preparation of polyamides with a linear or a complex architecture and containing phosphorus atoms, bonded to the polymer chain ends and metal hydroxides and/or metal salts that can react by acid-base reaction or complexation reaction with POOH groups and/or salt thereof; the preparation of polyamides can be obtained in the ordinary manufacturing plants used for the various standard materials. The molecular weight, the macromolecular architecture and consequently the viscosity in the molten polymer can easily be modulated also to facilitate its miscibility in polyamide matrix (such as Nylon 6, Nylon 66, etc.) in the case it is used as a masterbatch, and ensure even distribution of the flame-retardant functions throughout the material.

Also, compounds containing the polyamides described in the present patent can be prepared; such compounds can be produced with standard techniques using for example mixers (i.e. Brabender) or extruders (single or twin screw). Such compounds might contain minerals such as talc, wollastonite, kaolin or other common mineral fillers for polyamides and/or glass fibers and also other additives imparting the desired properties (i.e. antioxidants, light stabilizers etc.). To further improve the Flame Retardant properties, also other Flame retardant additives and synergists can be used such as, for example, brominated Polystyrene, decabromodiphenylethane, melamine cyanurate, red phosphor, organic phosphinates (such as Clariant Exolit®) or others and synergists such as antimonium trioxide, zinc borate, zeolites or others.

The invention also enables the number of flame-retardant functions to be programmed, and nanostructured organic/inorganic components to be inserted. The material can also be added as masterbatch to the matrix by compounding, and the contact time between the active functions of the masterbatch and the reactive groups of the matrix does not lead to crosslinking. The product can also act as carrier of other additives introduced into the polymer matrix. In view of its nature, it is perfectly compatible with other polyamides. Another advantage is the small amount of phosphorus in the final material (up to 5% by weight), which is not present as free red phosphorus.

Metals do not give problems related to undesired side reactions. These characteristics pave the way for obtaining flame-retardant polyamide fibres, which is currently impossible.

Without to be bound to any theory, metal hydroxide and/or metal ions may act by acid-base reaction or by creating complexes between them and the acidic - POOH and/or salt thereof terminal groups of the chain through ionic interactions with the metal ion itself. Therefore POOH groups are not available to create a salt with the -NH₂ terminal groups of the monomers and/or of the growing chains, that are therefore free to react with terminal -COOH groups increasing conversions. The relatively lower activity of -NH₂ groups in the presence of acidic -POOH groups, with respect of the presence of only -COOH groups, is due to higher acidity of -POOH groups in comparison to -COOH groups.

Furthermore when metals of metal hydroxides and/or of metal salts are bi- or polyvalent they may act as a coordinating ionic centers that generate ionic bonds between the chains. These ionic bonds could be responsible of the melt viscosity improvement in polyamides object of present invention. The coordinating ionic centers may be also responsible of the increasing char formation during oxidative thermal decomposition (i.e. TGA with air flux) of the present polyamides.

The invention will be described in greater detail in the following examples, which relate to materials with a polyamide base with a type AB monomer, but can also be extended to the other classes of polymers cited in this invention. The polymers in the Examples were obtained using the synthesis in glass reactor previously described.

### EXAMPLE 1

Three samples of linear polyamide 6 without and with metal ions, having the compositions reported below, were prepared by introducing simultaneously the reagents into the feed :

| No Metal Sample | |
|---|---|
| Caprolactam | 76.54% mol/mol |
| Aminocaproic acid: | 19.13% mol/mol |
| Hexamethylenediamine (HMD): | 1.44% mol/mol |
| CEPPA: | 2.89% mol/mol |
| Sample 1 | |
| Caprolactam | 76.54% mol/mol |
| Aminocaproic acid: | 19.13% mol/mol |
| Hexamethylenediamine (HMD): | 1.44% mol/mol |
| CEPPA: | 2.89% mol/mol |
| Mg²⁺ | 48% mol/mol on CEPPA |
| Sample 2 | |
| Caprolactam | 76.54% mol/mol |
| Aminocaproic acid: | 19.13% mol/mol |
| Hexamethylenediamine (HMD): | 1.44% mol/mol |
| CEPPA: | 2.89% mol/mol |
| Al³⁺ | 32% mol/mol on CEPPA |

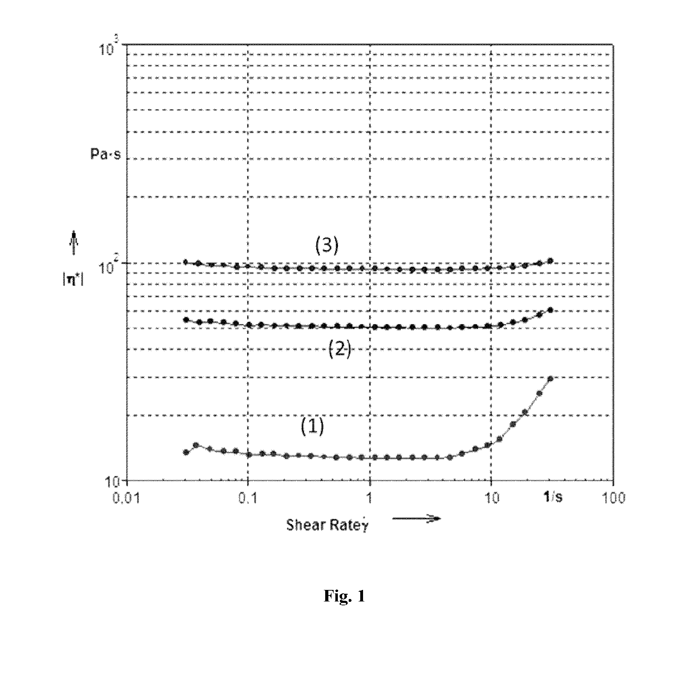

A frequency sweep experiment from 100 Hz to 0.1 Hz is reported in Figure 1, obtained at 250°C using a plate/plate geometry and with gap of 1 mm between the plates, wherein (1) is No Metal sample, (2) is Sample 1 and (3) is Sample 2.

### EXAMPLE 2

In order to evaluate how different metal ions can affect conversion and melt viscosity using the same feed three samples of branched polyamide 6 having the compositions reported below, were prepared.

**Table 1: Titration of end groups:**

| No Metal; | |
|---|---|
| Caprolactam: | 76.90% mol/mol |
| Aminocaproic acid: | 19.22% mol/mol |
| CEPPA: | 2.91% mol/mol |
| Bis(Hexamethylene)triamine (BHT) | 0.97% mol/mol |
| Sample 1; | |
| Caprolactam: | 76.90% mol/mol |
| Aminocaproic acid: | 19.22% mol/mol |
| CEPPA: | 2.91% mol/mol |
| Bis(Hexamethylene)triamine (BHT) | 0.97% mol/mol |
| K⁺; | 96% mol/mol on CEPPA |
| Sample 2; | |
| Caprolactam: | 76.90% mol/mol |
| Aminocaproic acid: | 19.22% mol/mol |
| CEPPA: | 2.91% mol/mol |
| Bis(Hexamethylene)triamine | (BHT) 0.97% mol/mol |
| Mg²⁺; | 48% mol/mol on CEPPA |
| Sample 3; | |
| Caprolactam: | 76.90% mol/mol |
| Aminocaproic acid: | 19.22% mol/mol |
| CEPPA: | 2.91% mol/mol |
| Bis(Hexamethylene)triamine | (BHT) 0.97% mol/mol |
| Al³⁺; | 32% mol/mol on CEPPA |

| **Sample** | | | **Terminal** NH₂ | **Terminal** COOH |
|---|---|---|---|---|
| No Metal | | | 89 | 87 |
| 1 | | | 30 | 29 |
| 2 | | | 34 | 32 |
| 3 | | | 32 | 31 |

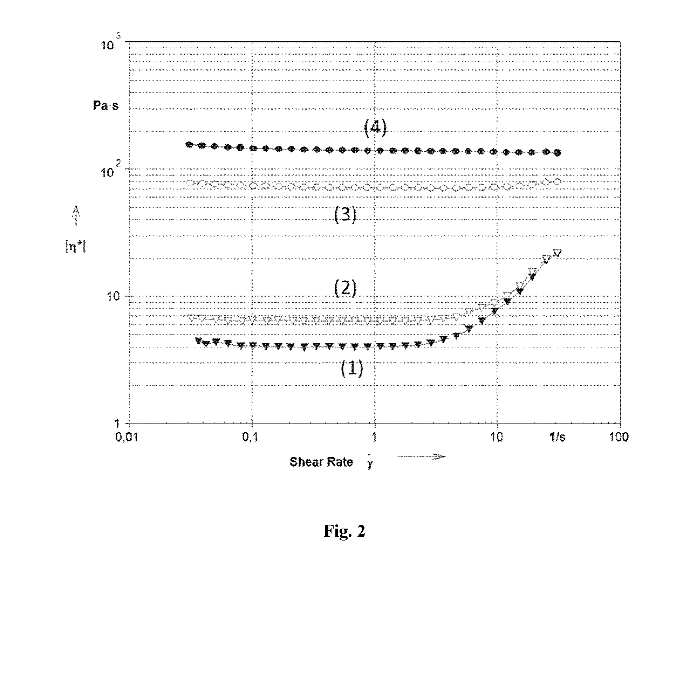

Titrations show that the end groups of these samples are much lower than the ones of the sample that does not contain the metal, thus confirming the highest conversion obtained. Rheological data are reported in Figure 2 wherein (1) is No Metal sample, (2) is Sample 1 and (3) is Sample 2, (4) is Sample 3.

The results show that metal ions having higher oxidation number increase the complexation of the polymeric chains, resulting in higher viscosities even if conversion (indicated by terminal groups) is almost identical.

### EXAMPLE 3: ANALYSIS OF MATERIALS

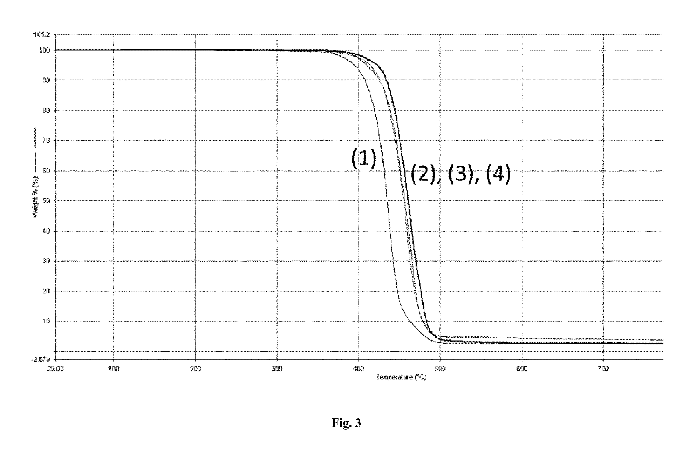

Thermal stability data of Sample 1-2-3 and of No Metal Sample with TGA (ThermoGravimetric Analysis), shown in Figure 3, demonstrate that samples containing metal ions start to degrade later than sample with no metal obtained using the same feed and are therefore even more stable to degradation. TGA curves were obtained with dynamic experiments from 50°C to 800°C at 20°C/min in air.

Figure 3 presents complete TGA curves wherein (1) is No Metal sample, (2) is Sample 1 and (3) is Sample 2, (4) is Sample 3.

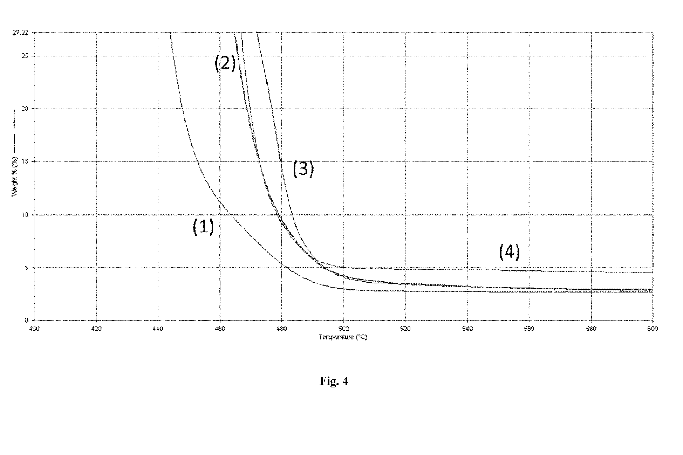

Figure 4 magnifies the TGA curves of Figure 3, between 400°C and 600°C showing that the residual weight is far higher than the one of the pure metal, thus indicating the formation of a carbon char (numerical data shown in table 2).

**Table 2: TGA data**

| Curve | Metal | Residue at 600°C (% w/w) | Metal quantity (% w/w) | Quantity of char (% w/w) |
|---|---|---|---|---|
| 1 | No metal | 2.64 | 0 | 2.64 |
| 2 | K⁺ | 2.83 | 0.93 | 1.90 |
| 3 | Mg²⁺ | 2.85 | 0.29 | 2.56 |
| 4 | Al³⁺ | 4.47 | 0.21 | 4.26 |

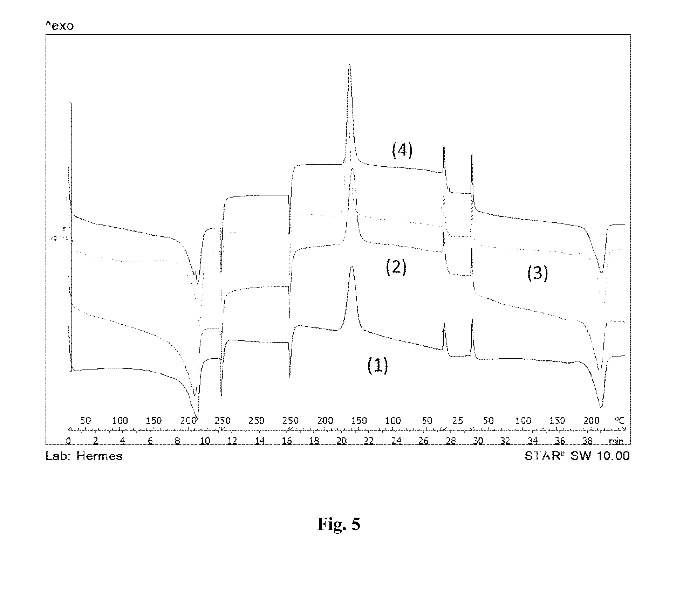

DSC of the samples (Figure 5) shows that there is no significant differences between polymers with and without metal (melting peaks are downward and crystallization peaks are upward).

DSC analyses were performed under nitrogen flow using the following dynamic conditions
Heating from 25°C to 250°C at 20°C/min
Temperature held at 250°C for 5 minutes
Cooling from 250°C to 25°C at -20°C/min
Temperature held at 25°C for 2 minutes
Heating from 25°C to 250°C at 20°C/min

## Claims

1. Linear or branched polyamides obtainable by polymerisation of a mixture containing a bifunctional monomer of type AB and/or a monomer mixture of type AA+BB in the presence of:
a) one or more carboxylic acids, or a derivative thereof such as ester and anhydride, and/or amines and/or polyhedral oligosilsequioxanes compounds (POSS) having one or more carboxyl and/or amino functional groups; and
b) one or more phosphorus containing molecules containing at least a -POOH group and/or a salt thereof; and
c) one or more metal hydroxides and/or metal salts, where the metal belongs to Groups from 1 to 14 of the Periodic Table;
provided that when the phosphorus containing molecules, as defined under b), contain the -POOH groups in salified form, then the presence of the metal hydroxides and/or metal salts, as defined under c) is optional.

2. Linear or branched polyamides according to claims 1, wherein the monomer AB and monomers mixture of type AA+BB have the end group A= -COOH, or a derivative thereof such as ester and anhydride, and the end group B= -NH2.

3. Linear or branched polyamides according to claim 2, wherein:
- the monomer of type AB is selected from the group consisting of caprolactam, 6-amino-hexanoic acid, para or meta amino benzoic acid, 11-aminoundecanoic acid, lauryl lactam, 12-aminododecanoic acid;
- the monomer of type AA is selected from the group consisting of adipic acid, suberic acid, sebacic acid, terephthalic/isophthalic acids, cyclohexane dicarboxylic acid, naphthalene dicarboxylic acid or an ester or an anhydride thereof;
- the monomer of type BB is selected from the group consisting of, hexamethylenediamine, 1,4-butylenediamine, isophoronediamine, phenylenediamines.

4. Linear or branched polyamides according to claim 3, wherein the monomer of type AB is caprolactam or 6-amino-hexanoic acid, the monomer of type AA is adipic acid or suberic acid and the monomer of type BB is hexamethylenediamine or 1,4-butylenediamine.

5. Linear polyamides according to claims 1-4 wherein the one or more carboxylic acids, or a derivative thereof such as ester and anhydride, and/or amines and/or polyhedral oligosilsequioxanes compounds (POSS), as defined under a), have one or two carboxyl and/or amino functional groups.

6. Branched polyamides according to claims 1-4, having a star- or tree-shaped structure, wherein the one or more carboxylic acids, or a derivative thereof such as ester and anhydride, and/or amines and/or polyhedral oligosilsequioxanes compounds (POSS), as defined under a), have at least three functional groups selected from carboxyl or primary and/or secondary amino functional groups; and optionally the polymerization mixture further contains:
d) one or more carboxylic acids or their derivatives such as ester and anhydride, and/or amines having one or two carboxyl and/or amino functional groups.

7. Branched polyamides, having a star- or tree-shaped structure, according to claim 6, wherein the amine is selected from the group consisting of bis hexamethylenetriamine, a hexafunctional amine of formula NH2-(CH2)6-NH-(CH2)6-NH-(CH2)6-NH-(CH2)6-NH-(CH2)6-NH2, polyamines deriving from the production of hexamethylenediamine, POSS with amino terminal groups, ethylenediamine oligomers.

8. Branched polyamides, having a star- or tree-shaped structure, according to claim 6, wherein the acid or a derivative thereof such as ester or anhydride is selected from the group consisting of trimesic acid, pyromellitic acid, 2,2'-6,6'-tetracarboxyethylcyclohexanone.

9. Branched polyamides, having a star- or tree-shaped structure, according to claim 6, wherein POSS has carboxyl terminal groups or their derivatives such as ester and anhydride.

10. Linear or branched polyamides according to each one of claims 1 to 9, wherein the phosphorus containing molecule is 2-carboxy ethyl phenyl phosphinic acid (CEPPA) and 2-Carboxyethane-1-phosphonic acid or a salt thereof.

11. Linear or branched polyamides according to each one of claims 1 to 10. wherein the metal of the metal hydroxide or of the metal salt is independently selected from the group consisting of lithium, sodium, potassium, rubidium, cesium, beryllium, magnesium, calcium, strontium, barium, boron, aluminum, gallium, indium, thallium.

12. Linear or branched polyamides according to each one of the claims 1-11 wherein the metal of the metal salt is selected from groups 1, 2 and 13 and the counter -ion is selected from the group consisting of sulfate, sulfite, organic sulfonate, carbonate, organic carboxylate, nitrate, phosphate, phosphite, organic phosphonate, organic phosphinate, halide.

13. Linear or branched polyamides according to each one of the claims 1-11 wherein the one or more phosphorus containing molecules contain at least a POOH group salified with a metal belonging to Groups from 1 to 14 of the Periodic Table.

14. Linear or branched polyamides according to claims 13 wherein the one or more phosphorus containing molecules contain at least a POOH group salified with a metal selected from the group consisting of lithium, sodium, potassium, rubidium, cesium, beryllium, magnesium, calcium, strontium, barium, boron, aluminum, gallium, indium, thallium.

15. Linear polyamides according to claims 5 wherein the one or more carboxylic acids and/or amines having one or two carboxyl and/or amino functional groups are selected from the group consisting of acetic acid, benzoic acid, adipic acid, suberic acid, sebacic acid, long- or short-chain aliphatic mono/diacids, terephthalic acid, isophthalic acid, long- or short-chain aliphatic mono/diamines, aromatic mono/diamines.

16. Linear or branched polyamides according to each one of the preceding claims having a molecular weight ranging between 1000 and 100.000 Daltons.

17. Linear or branched polyamides according to each one of the preceding claims having a phosphorus content of at least 100 ppm.

18. Linear or branched polyamides according to each one of the preceding claims having a metal hydroxides and/or metal salts content of at least 10 ppm.

19. Linear or branched polyamides obtainable by:
i) polymerisation of a polymerisation mixture containing a bifunctional monomer of type AB and/or a monomer mixture of type AA+BB in the presence of:
a) one or more carboxylic acids, or a derivative thereof such as ester and anhydride, and/or amines and/or polyhedral oligosilsequioxanes compounds (POSS) having one or more carboxyl and/or amino functional groups; and
b) one or more phosphorus containing molecules containing at least a -POOH group and/or a salt thereof; and
ii) compounding the obtained polymer with:
c) one or more metal hydroxides and/or metal salts, where the metal belongs to Group 1 to 14 of the Periodic Table.

20. A compound of the linear or branched polyamides according to each one of the preceding claims containing organic/inorganic flame retardants additives and/or their synergists.

21. The compound according to claim 19 wherein the flame retardant additive is selected from the group consisting of brominated polystyrene, decabromodiphenyl ethane, red phosphor, melamine cyanurate, organic phosphinates.

22. The compound according to claim 19 wherein the synergist is selected from the group consisting of antimonium trioxide, zinc borate, zeolites, zinc oxide complexes.

23. The compounds according to claims 19-21 wherein the quantity of polyamide in the compound is between 5 and 99%
